Europäisches Patentamt

**European Patent Office**

**Office européen des brevets**

(11) Publication number: **0 028 506**

**A1**

(12) # EUROPEAN PATENT APPLICATION

(21) Application number: **80303857.9**

(22) Date of filing: **30.10.80**

(51) Int. Cl.³: **A 47 C 31/02**

(30) Priority: **03.11.79 GB 7938142**

(43) Date of publication of application:
**13.05.81 Bulletin 81/19**

(84) Designated Contracting States:
**BE DE FR GB IT LU NL SE**

(71) Applicant: **STOREY BROTHERS & COMPANY LIMITED**
**Whitecross**
**Lancaster LA1 4XH(GB)**

(72) Inventor: **Fenton, Sydney Desmond**
**1 Leicester Avenue Garstang**
**Preston Lancashire(GB)**

(72) Inventor: **Bailiff, William Rawcliffe**
**21 Church Grove**
**Overton Near Lancaster(GB)**

(74) Representative: **Hadfield, Robert Franklin et al,**
**20, St. Mary's Parsonage**
**Manchester M3 2NL(GB)**

(54) Upholstered article with frame.

(57) An upholstered article such as a car seat is provided with a frame (5) consisting of a pair of closely adjacent tubes (6,7). The tubes (6,7) preferably have a narrow, obstruction free gap between them into which a trim-strip (12) of suitable cross-section can be fitted. A plastics extrusion can be made for use as a trim-strip.

The gap and trim-strip can be utilised in a method of fixing the upholstery on the article, the trim-strip (12) being utilized to trap the edges of one or more sheets of covering material (4,9) in the gap.

FIG. 2

EP 0 028 506 A1

- 1 -

Upholstered Article with frame

This invention relates to an upholstered articles, such
as a seat with a frame, and particularly although not
exclusively to a seat suitable for use in a motor
vehicle.

Upholstered articles such as automobile seats are
frequently made with a construction in which a frame
extends around the periphery of the backrest, and
around the periphery of the cushion. The backrest and
cushion are often separate, particularly in the case of
seats which recline and/or have an adjustable backrest.
The frame functions both to support the seat and to
absorb the forces exerted upon it by its occupants when
in use, particularly in the fore-and-aft direction when
the occupant of the seat arches up against the top of
the backrest as when smoothing coat or skirt or moving a
static seat belt from the seat.

It is usual for the seat cover to be cut and sewn
together by skilled machinists and not directly attached
to the frame itself. However, UK Patent No.1,493,112
discloses an upholstered article with a hollow section
frame and a slot in the hollow section into which the
edges of coverings can be secured by means of a suitably
shaped trim strip.

A snag of this construction is that the hollow section frame with slot is difficult to make, the slot width needing to be constant and tending to be altered when the hollow section material is bent into shape for the frame.

According to the present invention an upholstered article comprises a seat having a cushion and a backrest including a frame at the periphery of at least part thereof which comprises a pair of closely adjacent tubular members rigidly attached together and extending along at least 3 sides of the cushion or backrest. Preferably the tubular members have a gap between them whose width is maintained substantially constant by rigid spacer members attaching the tubular members together.

Preferably the upholstered article is a seat, and the tubular members are provided in both the backrest and cushion of the seat. Preferably also the tubular members in each part of the seat are spaced apart in the plane substantially perpendicular to the support surface of that part of the seat.

The tubular members may be a pair of metal tubes and the spacer members metal brackets welded to the backs of the tubes such that the whole length of the gap between the tubes is accessible from the external (relative to the upholstered article) side of the frame.

Alternatively the tubular members and spacer members may be made from a single metal strip of suitable width whose edges are both folded over into hollow tubular shapes (although not necessarily fully closed).

The gap between the two tubes is preferably of a narrow width which is suitable to grip a suitably shaped trim strip. Generally the tubular members will be of approximately circular cross-section but tubular member of non-circular cross section may be used if desired.

Thus according to the present invention also an upholstered article includes a frame at the periphery of at least part of the article comprising a pair of tubular members attached together by rigid spacer members in such a manner as to leave an unobstructed gap of substantially constant width between said tubular members, and also includes a trim strip, and a covering of sheet material, an edge of said sheet material being trapped in the gap between the tubular members by the trim strip which is separate from the frame and has a cross section which includes an external flange to provide a neat external appearance, a neck portion extending into the gap and a head portion on the neck, wider than the neck and located beyond the narrowest part of the gap, the neck and head being so dimensioned as to provide a tight grip in the gap whilst enabling the trim strip to be pushed into position.

The trim strip is preferably of a plastics material which is sufficiently flexible to facilitate the insertion of the neck and head portions into the gap yet rigid enough to provide the necessary grip.

Suitable plastics materials are, for example PVC, polypropylene, polyethylene, nylon etc.......

The sheet whose edge is trapped in the gap can be for example, a fabric with or without a plastics coating, or a sheet of plastics material.

Where, for example the upholstered article is a seat back, in which coverings are required back and front, two sheet edges can be trapped by the trim strip in the gap. In such cases it is desirable that the edge of one of the sheets be initially held in the gap by means other than the trim strip in order to facilitate the insertion of the edge of the other sheet and then the trim strip into the gap.

This object can be achieved by various means, for example the first sheet to be positioned may be held in place by the technique known as string lasting. In this technique the sheet is hemmed at its edge and a draw string passed through the hem. When the sheet has been positioned around the frame with its hemmed edge in the gap the draw string can be tightened and tied, pulling the sheet edge firmly into the gap and holding it there. The edge of the second sheet can then be forced into the gap by means of the trim strip.

In an alternative to the string lasting, a subsidiary frame member can be provided behind the gap onto which the edge of the first sheet can be attached by known means such as hog rings. Thus, for example a strong metal wire can be attached to the spacer members behind the gap onto which the edge of the first sheet is to be attached.

Further possibilities will be apparent to those skilled in the art.

The advantages of the frame construction in this invention are the potential for light weight, especially compared to a frame such as described in UK Patent No. 1,493,112, ease of fixing of the edges of seat coverings eliminating the sewing of these edges, and great strength in the direction where it is most required.

The invention will now be described, by way of example only, with reference to the accompanying drawings in which

Figure 1 is a perspective view of a seat in which a portion of the seat back is cut away to show the frame construction.

Figure 2 is a cross-sectional view of the frame of the seat shown in figure 1.

Figure 3 is a perspective view of a part of a frame provided with a subsidiary member and

Figure 4 is a perspective view of a part of a frame made from a single sheet of metal.

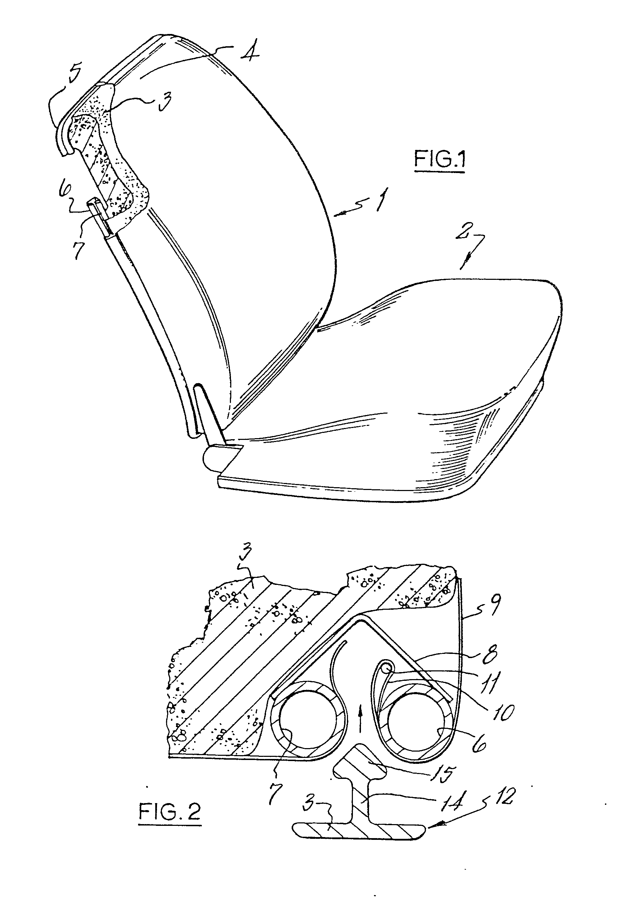

The seat shown in figure 1 has a backrest 1 and a cushion part 2 both of which are upholstered with a foam cushion 3 and a fabric covering 4.

Both the backrest 1 and cushion 2 have a peripheral frame 5 which consists of a pair of tubes 6, 7 e.g. of metal, which have between then a gap of substantially constant width (e.g. several millimetres) and are attached together by rigid spacer brackets 8 shown more clearly in figure 2.

Figure 2 is a cross section through the frame of the backrest and shows two steel tubes 6, 7 and a steel spacer bracket 8 welded to the tubes which is bent in order to provide ample clearance behind the gap. A fabric covering 9 for the back of the backrest is hemmed at its edge 10 and a drawstring 11 passes through the hem, the edge 10 of the covering 9 being drawn into the gap between the tubes 6 and 7 and held in place there by tightening of the drawstring 11.

The edge of the fabric covering 4 of the face of the backrest is not hemmed but is trapped in the gap between the tubes by means of a trim strip 12. The trim strip 12 is an extrusion of a plastics material such as PVC and has a cross section which includes an external flange 13, a neck portion 14 and a wider head portion 15. The head portion is capable of being forced through the gap between the tubes 6 and 7 and when so positioned holds the trim strip in place and keeps the fabric coverings 4 and 9 trapped against the tubes.

If desired both the coverings 4 and 9 can have hemmed edges and drawstrings, and thus have their edges drawn into the gap between the tubes by tightening of the strings.

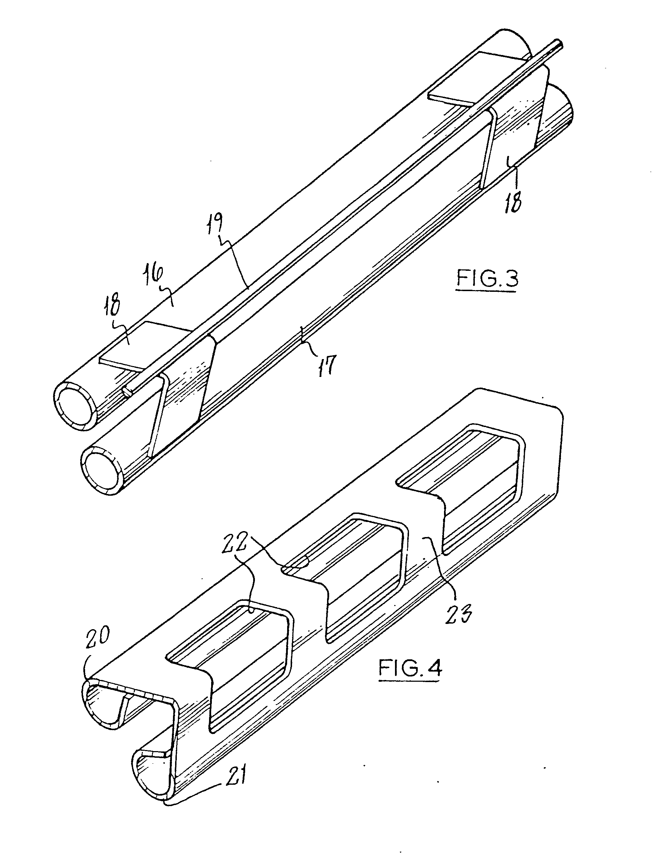

An alternative frame construction is shown in Figure 3 in which a pair of tubes 16 and 17 are held together by brackets 18 and a subsidiary member 19 of thick metal wire is welded onto the brackets 18.

In use of this frame construction in a seat of the kind shown in Figure 1 the edge of a first fabric sheet can be inserted into the gap between the tubes 16 and 17 and attached by means of conventional hog rings to the wire 19. The edge of a second sheet of fabric can then be pushed into the gap and held there by a trim strip of the kind shown in Figure 2.

A further alternative frame construction is shown in Figure 4 in which the frame has a pair of tubular members 20 and 21 which are the turned over edges of a single metal strip containing holes 22 and bent longitudinally along its mid-section at approximately right angles to leave bridging portions 23 acting as the rigid spacers between the tubular members. This frame can be used in place of the frame used in Figures 1 and 2, or modified by the addition of a subsidiary member analogous to the member 19 of the frame construction shown in Figure 3.

It should be appreciated that the parallel tubes may extend along only 3 sides of the backrest and cushion portions of the seat. For example, the edges of the backrest and cushion which are adjacent where backrest and cushion meet need not necessarily be provided with the parallel tubes.

The cushion of the seat can be supported by any kind of conventional suspension which can be attached to the peripheral frame.

The brackets which attach the backrest to the cushion of the seat may necessitate appropriate slots or slits to be left in the covers of cushion or backrest to facilitate fitting. Alternatively in some cases a bracket can be attached e.g. to the backrest through the cover after the cover has been attached to the peripheral frame.

CLAIMS:

1. An upholstered article comprising a seat including a frame at the periphery of a least part thereof which comprises a pair of closely adjacent parallel tubular members rigidly attached together and extending along at least 3 sides of the cushion or backrest.

2. An upholstered article according to claim 1 which comprises a seat including said tubular members in each of the cushion and backrest part of the seat.

3. An upholstered article according to claim 1 or 2 in which said tubular members in each part of the seat lie in a plane substantially perpendicular to the support surface of that part of the seat.

4. An upholstered article according to claim 1, 2 or 3 in which the tubular members have a gap between them whose width is maintained substantially constant by rigid spacer members attaching the tubular members together.

5. An upholstered article according to any one of claims 1 to 4 in which the tubular members are a pair of metal tubes.

6. An upholstered article according to claim 5 when dependent upon claim 4 in which the spacer members are metal brackets welded to the backs of the tubes such that the whole length of the gap between the tubes is accessible from the external side of the frame.

7. An upholstered article according to any one of claims 1 to 5 in which the tubular members are made from a single metal strip of suitable width whose edges are both folded over into hollow tubular shapes.

8. An upholstered article according to any one of the preceding claims in which the tubular members extend round all 4 sides of at least one of the cushion and backrest.

9. An upholstered article which includes a frame at the periphery of at least part of the article comprising a pair of tubular members attached together by rigid spacer members in such a manner as to leave an unobstructed gap of substantially constant width between said tubular members, and also includes a trim strip and a covering of sheet material an edge of which is trapped in the gap between the tubular members by the trim strip which is separate from the frame and has a cross section which includes an external flange for covering the gap and a head portion on the neck, wider than the neck and located beyond the narrowest part of the gap, the neck and head being so dimensioned as to provide a tight grip in the gap whilst still enabling them to be pushed into position.

10. An upholstered article according to claim 9 in which the trim strip is a plastics material sufficiently flexible to facilitate the insertion of the neck and head portions into the gap yet rigid enough to provide the necessary grip.

11. An upholstered article according to claim 9 or 10 in which the edges of two separate sheets of covering material are trapped in the gap by the trim strip.

12. An upholstered article according to any one of claims 9 10 and 11 in which at least one sheet of covering material has hemmed edge containing a drawstring to draw said edge into the gap during assembly of the upholstered article.

13. An upholstered article according to claim 9, 10 or 11 in which the frame includes a subsidiary member extending behind said gap to which an edge of a sheet of covering material can be attached to hold said edge in said gap.

14. An upholstered article according to claim 13 in which the subsidiary member is a thick wire attached to the spacer members and extending along behind the gap.

0028506

1/2

FIG.1

FIG.2

FIG.3

FIG.4

0028506

European Patent Office

**EUROPEAN SEARCH REPORT**

EP Application number
EP 80 30 3857

## DOCUMENTS CONSIDERED TO BE RELEVANT

| Category | Citation of document with indication, where appropriate, of relevant passages | Relevant to claim |
|---|---|---|
| | DE - A - 2 915 558 (KNOLL) <br><br> * claims 1,2,4,5; page 6, paragraph 4 - page 7, paragraph 1; figures * <br><br> & GB - A - 2 020 175 <br><br> -- | 1,9, 11,12 |
| D | GB - A - 1 493 112 (COX) <br><br> * page 2, lines 51-97; figures * <br><br> -- | 1,9-11 |
| | GB - A - 1 435 692 (COX) <br><br> * page 2, lines 57-69,101-110; figures 1,3,5,8 * <br><br> ------- | 1,9-11 |

### CLASSIFICATION OF THE APPLICATION (Int. Cl.3)

A 47 C 31/02

### TECHNICAL FIELDS SEARCHED (Int. Cl.3)

A 47 C

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-02-1981 | VANDEVONDELE |

EPO Form 1503.1   06.78